# EUROPEAN PATENT APPLICATION

(11) **EP 1 724 530 A1**
(43) Date of publication of application: **22.11.2006**
(21) Application number: 06113405.2
(22) Date of filing: 02.05.2006
(51) Int. Cl.: F24C 15/32, A47J 27/14

(54) **System and method for draining water from a steam oven**

(30) Priority: 03.05.2005 US 120408
(71) Applicant: Whirpool Corporation, Benton Harbor, MI 49022 (US)
(72) Inventor: Reay, Malcolm, V.le G. Borghi 27 21025 Comerio (IT)
(74) Representative: Guerci, Alessandro

(57) **Abstract**

A household oven comprises a cooking cavity and a steam generator for introducing steam into the cooking cavity. The oven further comprises a temperature sensor that senses a parameter representative of a temperature of water in the steam generator, and the parameter is used to determine if the water temperature is suitable for draining. A flow controller operably coupled to the temperature sensor is fluidly coupled to a drain of the steam generator and controls draining of the water from the steam generator depending on whether the water temperature is suitable for draining.

## Description

### BACKGROUND OF THE INVENTION

### Field of the Invention

The invention relates to a steam oven with a system and method for draining water having a suitable draining temperature from a steam generator in a household oven.

### Description of the Related Art

Steam ovens typically comprise a heating system, as in a conventional oven, for heating a cooking cavity and a steam system for generating steam from water and introducing the steam into the cooking cavity to facilitate the baking process. Water can be supplied to the steam system from a main water supply or by a user through a water inlet accessible to the user. In the latter case, the inlet can be adapted to receive water directly poured by the user or to mate with a portable vessel that stores a supply of water. The water introduced into the steam oven can be stored in an internal water reservoir upstream from the steam generator and supplied to the steam generator as needed. An example of a commonly used steam generator is a boiler having a chamber that holds water, which submerges an evaporation element, such as a resistive heating element. The evaporation element heats the water in the chamber to its boiling point to convert the water to steam for introduction into the cooking cavity.

Some steam ovens further include a drain system to drain water from the steam system. The drain system directs unused water to a main water drain or a drain vessel accessible by the user. The steam feature can be used for maintaining the oven and for emptying unused water when the steam system is only occasionally employed. Drainage systems are also useful for passing descaling agents through the steam system to remove the hard mineral coating that tends to form on the inside surfaces of the steam generator. When the drainage system is used to drain water from the steam generator to a user accessible vessel, the water in the steam generator can potentially be at a temperature sufficiently high for injuring an individual, especially if the steam system has recently been utilized. During the draining process, cold water from the water reservoir can drain with the hot water from the steam generator and thereby reduce the temperature of the hot water; however, the temperature of the mixture can nevertheless be higher than desirable for safe draining. Thus, it is desirable to prevent drainage of water at an unsuitable temperature from a steam system.

### SUMMARY OF THE INVENTION

A household oven according to one embodiment of the invention comprises a housing defining a cooking cavity, a steam generator having an inlet for receiving water, a drain, and a steam outlet operably connected to the cooking cavity for introducing steam into the cooking cavity, a temperature sensor that senses a parameter representative of a temperature of water in the steam generator for determining if the temperature of the water in the steam generator is suitable for draining, and a flow controller operably coupled to the temperature sensor and fluidly coupled to the drain to control draining of the water from the steam generator based on the determination of whether the water temperature is suitable for draining.

The water temperature can be suitable for draining when the sensed parameter is less than a predetermined threshold.

The sensed parameter can be the water temperature. The temperature sensor can directly contact the water to sense the parameter. The temperature sensor can be located in the steam generator. The temperature sensor can directly contact the water in the steam generator to sense the parameter.

The flow controller can comprise a pump. The flow controller can comprise a valve.

The household oven can further comprise a drain vessel having an inlet fluidly coupled to the steam generator drain, whereby the drain vessel receives drain water from the steam generator via the flow controller. The drain vessel can be removably mounted to the oven.

The household oven can further comprise a water reservoir upstream of the steam generator and fluidly coupled to the steam generator inlet for supplying water to the steam generator. The water reservoir can be fluidly coupled to the steam generator through a direct fluid connection whereby water in the water reservoir flows by gravity to the steam generator and drains with the water in the steam generator when the water temperature is suitable for draining.

The household oven can further comprise an indicator that communicates at least one of a temperature status of the water in the steam generator and an operational status of the flow controller. The indicator can communicate both the temperature status of the water in the steam generator and the operational status of the flow controller

A method according to another embodiment of the invention for draining water from a steam generator of a household oven comprising a housing defining a cooking cavity, the steam generator operably connected to the cooking cavity for introducing steam into the cooking cavity the method comprises sensing a parameter representative of a temperature of water in the steam generator, determining if the water temperature is suitable for draining, and draining the water from the steam generator when the water temperature is determined suitable for draining.

The determining if the water temperature is suitable for draining can comprise comparing the parameter to a predetermined threshold. The parameter can be the water temperature.

The draining of the water can comprise actuating a flow controller downstream of the steam generator. The method can further comprise communicating at least one of a temperature status of the water in the steam generator and an operational status of the flow controller. The actuating of the flow controller can comprise operating a pump. The actuating of the flow controller can comprise opening a valve.

The method can further comprise draining water from a water reservoir that supplies water to the steam generator during the draining of the water from the steam generator.

The draining of the water can comprise draining the water into a drain vessel. The method can further comprise removing the drain vessel from the oven.

### BRIEF DESCRIPTION OF THE DRAWINGS

In the drawings:

Fig. 1 is a perspective view of an exemplary household oven according to one embodiment of the invention.

Fig. 2 is a schematic view of a steam system for the oven of Fig. 1 and having a steam generator and a drain for draining water from the steam generator according to one embodiment of the invention.

Fig. 3 is a schematic view of a control system for the oven of Fig. 1 according to one embodiment of the invention.

Fig. 4 is a schematic view of a steam system for the oven of Fig. 1 and having a steam generator and a drain for draining water from the steam generator according to an alternative embodiment of the invention.

### DESCRIPTION OF THE PREFERRED EMBODIMENT

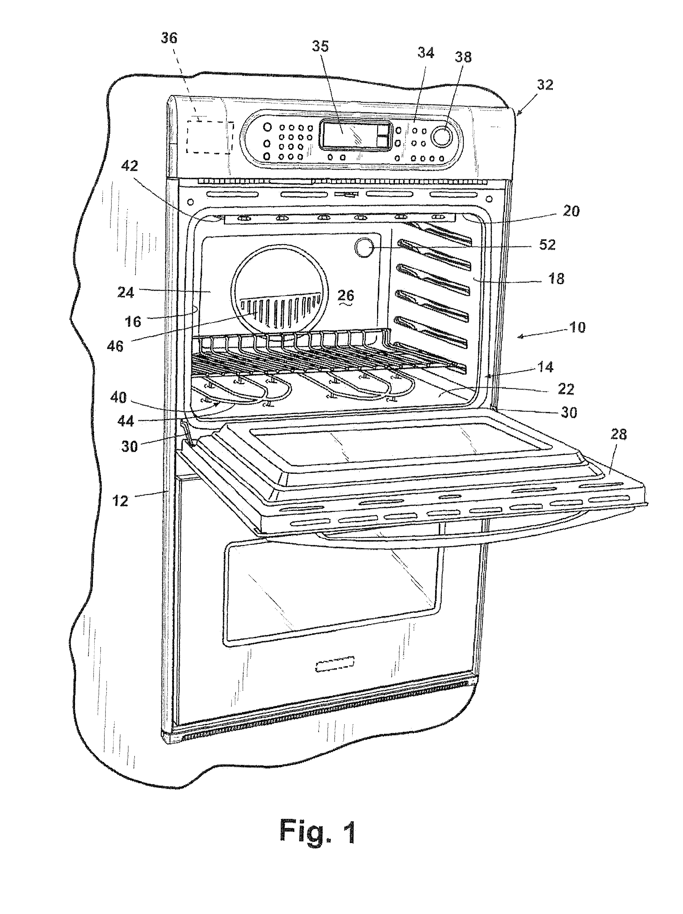

Referring now to the figures, Fig. 1 illustrates an exemplary automatic household oven 10 comprising a cabinet 12 with an open-face housing 14 having a pair of spaced side walls 16, 18 joined by a top wall 20, a bottom wall 22, and a rear wall 24 to define an open-face cooking cavity 26. A door 28 pivotable at a hinge 30 selectively closes the cavity 26, as is well-known in the oven art. When the door 28 is in the open position, a user can access the cavity 26, while the door 28 in the closed position prevents access to the cavity 26 and seals the cavity 26 from the external environment. The oven 10 shown in the figures is a built-in oven, but it is within the scope of the invention for the oven to be a freestanding oven.

The oven 10 further comprises a console 32 with a control panel 34 accessible to the user for inputting desired cooking parameters, such as temperature and time, of manual cooking programs or for selecting automated cooking programs. The control panel 34 communicates with a controller 36 located in the cabinet 12. The controller 36 can be a proportional-integral-derivative (PID) controller or any other suitable controller, as is well-known in the automatic oven art. The controller 36 stores data, such as default cooking parameters, the manually input cooking parameters, and the automated cooking programs, receives input from the control panel 34, and sends output to the control panel 34 for displaying a status of the oven 10 or otherwise communicating with the user. The status of the oven 10 can be communicated through an indicator 35, which is shown in the illustrated embodiment as a display screen. Other exemplary indicators 35 include indicator lights and audible alarms. Additionally, the console 32 includes a drain switch 38, which will be described in more detail below.

With continued reference to Fig. 1, the oven 10 further comprises a heating system 40 having an upper heating element 42, commonly referred to as a broiler, and a lower heating element 44. Fig. 1 shows the lower heating element 44 as being mounted just above the cooking cavity bottom wall 22; however, it is within the scope of the invention for the lower heating element 44 to be hidden or mounted below the bottom wall 22. Further, the upper and lower heating elements 42, 44 can be mounted at the side walls 16, 18 of the cavity 26, as disclosed in U.S. Patent No. 6,545,251 to Allera et al. The heating system 40 according to the illustrated embodiment further comprises a convection fan 46 that circulates air and steam, when present, within the cavity 26. The convection fan 46 can be any suitable fan and can be mounted in any suitable location of the cavity 26, such as in the rear wall 24. The particular type of heating system is not germane to the invention; the heating system 40 shown and described herein is for illustrative purposes only and is not meant to limit the invention in any manner.

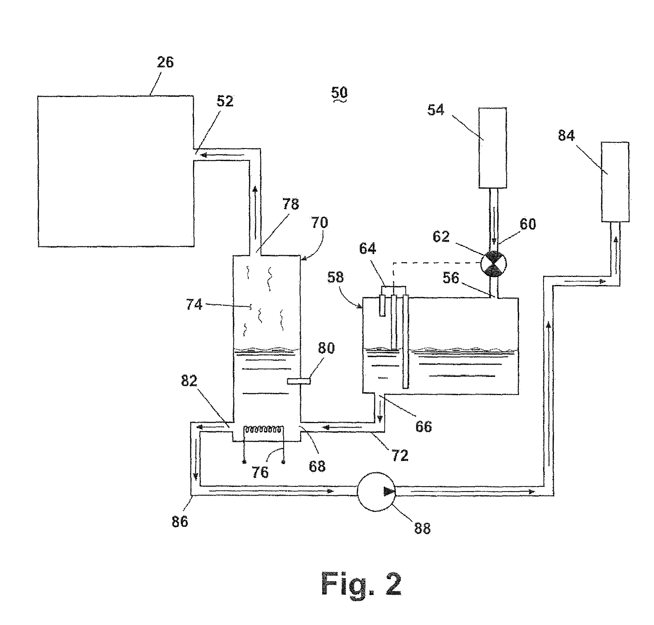

In addition to the heating system, the oven 10 comprises a steam system 50, shown schematically in Fig. 2, for generating steam and introducing the steam into the cavity 26 through a steam inlet 52 formed in, for example, the rear wall 24 of the housing 14, as shown in Fig. 1. Referring particularly to Fig. 2, water is supplied to the steam system 50 from a supply vessel 54, which can be removably mounted to the oven 10. An exemplary supply vessel and an exemplary mounting of the supply vessel to the oven are disclosed in the application No. US20040233, entitled "Steam Oven with Fluid Supply and Drain Vessel" and filed concurrently with the present application. The supply vessel 54 is fluidly connected to an inlet 56 of a water reservoir 58 through a first fluid conduit 60. Flow of water from the supply vessel 54 to the water reservoir 58 is controlled by a water reservoir valve 62 disposed between the supply vessel 54 and the water reservoir 58, such as in the first fluid conduit 60. Operation of the water reservoir valve 62 is responsive to a water level signal output from a water level sensor 64 associated with the water reservoir 58 to detect a level of water in the water reservoir 58. When the water level sensor 64 detects that the water reservoir 58 is substantially full, the water reservoir valve 62 closes to prevent overflowing of the water reservoir 58.

The water reservoir 58 has an outlet 66 fluidly connected to an inlet 68 of a steam generator 70 through a second fluid conduit 72. The inlet 68 leads into a chamber 74 that holds a supply of water provided from the water supply vessel 54 via the water reservoir 58. According to the illustrated embodiment, the chamber 74 is positioned adjacent to the water reservoir 58 such that the water flows from the water reservoir 58 to the chamber 74 under gravity, and the level of water in the chamber 74 is the same as the level of water in the water reservoir 58. As a result of this configuration, the water level sensor 58 also indirectly detects the level of water in the steam generator 70. The water in the chamber 74 is heated by an evaporation element 76, such as a resistance heater, to at least the boiling point of water so that the water converts to steam, which leaves the chamber 74 at a steam outlet 78 for introduction into the cooking cavity 26 through the inlet 52.

The steam generator 70 further comprises a temperature sensor 80 to sense a parameter representative of a temperature of the water in the chamber 74, which can include a direct or indirect sensing of the temperature of the water in the chamber. Direct sensing includes directly sensing the water. Indirect sensing includes sensing the temperature of an item, such as the chamber wall, having a known or determinable relationship with the temperature of the water. The temperature sensor 80 can be positioned in any suitable location to sense the parameter. For example, the temperature sensor 80 can be mounted to the steam generator 70 in direct contact with the water in the chamber 74, embedded in a wall of the steam generator 70 to encase and protect the temperature sensor 80, or attached to an exterior surface of the steam generator 70. Further, the temperature sensor 80 can be mounted outside the steam generator 70, such as at a location downstream from the steam generator 70, as will be described in further detail below. The temperature sensor 80 can be any suitable type of sensor, including, but not limited to, thermocouples, ceramic thermistors, metallic resistance temperature devices (RTDs), and infrared temperature measurement devices.

Water can exit the steam generator 70 through a drain 82 fluidly coupled to a drain vessel 84 through a third fluid conduit 86. Because the water reservoir 58 is fluidly coupled to the steam generator 70, any water present in the water reservoir 58 will drain with the water from the steam generator 70. The drain vessel 84 can be removably mounted to the oven 10, and an exemplary drain vessel and an exemplary mounting of the drain vessel to the oven are disclosed in the aforementioned patent application.
Optionally, the oven 10 can include a vessel sensor (not shown) to detect a presence of the drain vessel 84 to ensure that the drain vessel 84 is positioned for receiving water drained from the steam generator 70, as disclosed in the aforementioned patent application. Flow of water from the steam generator 70 to the drain vessel 84 is controlled by a flow controller, shown in the illustrated embodiment as a pump 88, disposed between the steam generator 70 and the drain vessel 84, such as in the third fluid conduit 86. The pump 88 moves water from the chamber 74 to the drain vessel 84 upon actuation of the aforementioned drain switch 38 by the user.

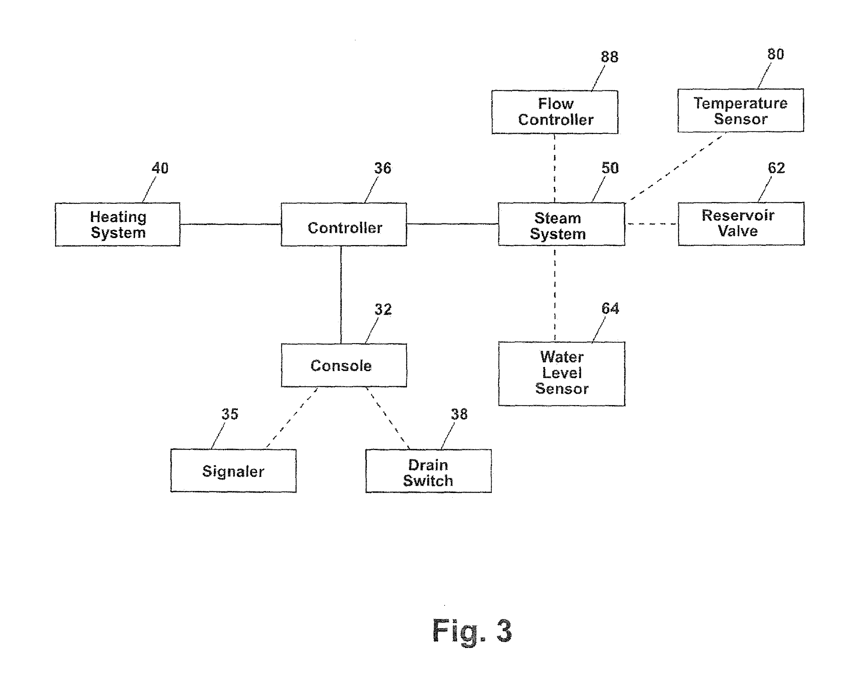

As shown schematically in Fig. 3, the drain switch 38 is operably coupled to the controller 36, which, in turn, is operably coupled to the flow controller 88. Additionally, the controller 36 communicates with the vessel sensor (not shown), if present, such that the controller 36 will not activate the flow controller 88 unless the vessel sensor detects the presence of the drain vessel 84. Thus, the flow controller 88 cannot drain the water from the steam generator 70 unless the drain vessel 84 is mounted to the oven 10.

The indicator 35 is also operably coupled to the controller 36, which, in turn, is operably coupled to the temperature sensor 80. When the parameter sensed by the temperature sensor 80 indicates that the temperature of the water in the steam generator 70 is not suitable for draining (i.e., the water temperature is too high), the controller 36 prevents actuation of the flow controller 88 and thereby draining of the water from the steam generator 70. Simultaneously, the controller 36 instructs the indicator 35 to execute a signal, such as a visual or audio signal, to indicate to the user at least one of a temperature status of the water and an operational status of the flow controller. For example, the signal can indicate that the water temperature is not suitable for draining or that the flow controller 88 is preventing flow of water from the steam generator 70 to the drain vessel 84. Conversely, when the parameter sensed by the temperature sensor 80 indicates that the temperature of the water in the steam generator 70 is suitable for draining, the controller 36 actuates the flow controller 88 to drain the water from the steam generator 70. Simultaneously, the controller 36 can instruct the indicator 35 to execute a signal, such as a visual or audio signal, to indicate to the user at least one of the temperature status of the water and the operational status of the flow controller. For example, the signal can indicate that the water temperature is suitable for draining or that the flow controller 88 is draining the water from the steam generator 70 to the drain vessel 84. As a result of the signal, the user knows whether the water is being drained from the steam generator 70.

The water level sensor 64 and the reservoir valve 62 of the steam system 50 are operably coupled to the controller 36, as schematically illustrated in Fig. 3, to control the flow of water to the water reservoir 58, as previously described. The controller 36 also instructs the steam system 50 to activate or deactivate the evaporation element 76 and provides instructions regarding the desired temperature of the water in the steam system 50, which can be monitored by the temperature sensor 80, in order to achieve a desired relative humidity in the cavity 26.

Fig. 3 also schematically illustrates the heating system 40 as being operably coupled to the controller 36. The controller 36 instructs the heating system 40 to activate or deactivate the upper heating element 44, the lower heating element 46, and the convection fan 48, either all together, individually, or in groups, and provides instructions regarding the desired temperature of the cavity 26 and the rate at which the heating system 40 heats the cavity 26 according to a selected cooking cycle.

In operation, a user who desires to bake a food item in the oven 10 with steam provides water to the steam system 50, such as through the supply vessel 54. The water from the supply vessel 54 flows toward the water reservoir 58 through the first fluid conduit 60. The water flows through the water reservoir valve 62 and into the water reservoir 58 through the inlet 56 until the water in the supply vessel 54 is depleted or until the water level sensor 64 detects that the water reservoir 58 is substantially full, at which point the reservoir valve 62 assumes a closed condition to prevent water from flowing from the supply vessel 54 into the water reservoir 58 through the inlet 56. As water flows into the water reservoir 58, water also flows into the chamber 74 of the steam generator 70 via the second fluid conduit 72 so that the water level in the steam generator 70 is the same as in the water reservoir 58, as described above. When the steam system 50 has a sufficient amount of water, as determined by the water level sensor 64, the controller 36 can execute a desired automatic or manual cooking cycle, as input by a user through the control panel 32 on the console 34.

To drain the water from the steam generator 70, the user mounts the drain vessel 84 to the oven 10, and the vessel sensor detects the presence of the drain vessel 84 and sends a signal to the controller 36 so that the flow controller 88 can be operated, as described above. Additionally, the temperature sensor 80 senses the parameter representative of the temperature of the water in the steam generator 70 and sends a signal representative of the parameter to the controller 36. The controller 36 compares the parameter to a predetermined threshold to determine whether the water temperature is suitable for draining. According to one embodiment, the parameter can be the actual temperature of the water in the steam generator, and the threshold can be a maximum temperature acceptable for draining the water, which is a water temperature above which the water is sufficiently hot to make it unsafe to remove the water for the user in case the user contacts the hot water or is otherwise exposed to the heat of the hot water, such as in the event of a spill. A suitable water temperature for draining corresponds to temperatures below the maximum temperature acceptable for draining the water, and the threshold for defining a suitable water temperature for draining can be determined empirically. An exemplary threshold is about (50 °C) 122 °F. For safety purposes, the amount of water from the water reservoir 58 that drains with the water from the steam generator 70 can be assumed negligible when determining the threshold.

Next, the user actuates the drain switch 38 to attempt to activate the flow controller 88 to drain the water from the steam generator drain 82 to the drain vessel 84 via the third fluid conduit 86. If the controller 36 has determined that the water temperature is suitable for draining, such as by determining that the parameter is less than the threshold, then the flow controller 88 is activated for draining the water. As stated previously, because the water reservoir 58 is fluidly coupled to the steam generator 70, any water present in the water reservoir 58 will drain with the water from the steam generator 70. During the draining process, the indicator 35 can optionally communicate a signal to the user, as described above, so that the user is aware that the water is draining from the steam generator 70. However, if the controller 36 has determined that the water temperature is not suitable for draining, such as by determining that the parameter is greater than the threshold, then the controller 36 precludes draining of the water from the steam generator 70 by preventing the flow controller 88 from being activated. The indicator 35 communicates a signal, as described above, to the user so that the user is aware that the water temperature is not suitable for draining and that the water is not being drained from the steam generator 70. The user can wait a period of time for the water in the steam generator 70 to cool and thereafter execute another attempt to drain the water.

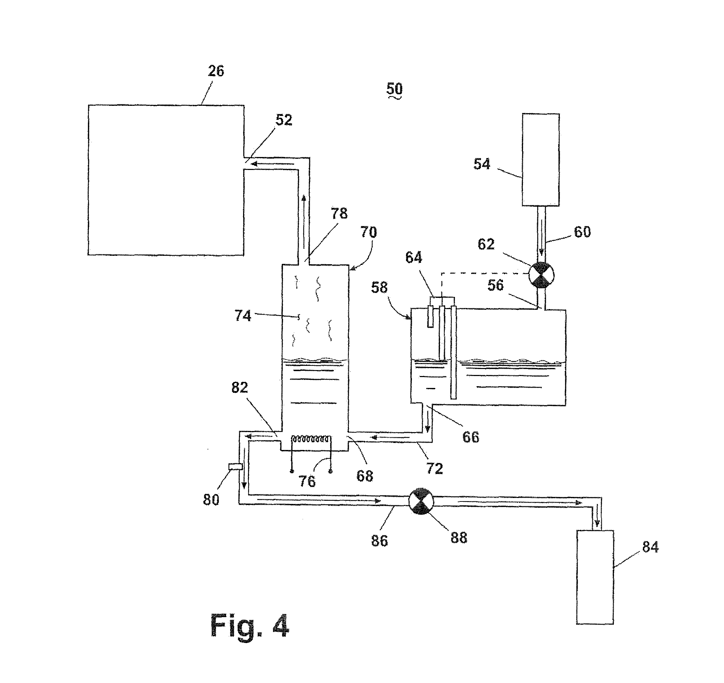

A steam system 50 according to another embodiment of the invention is illustrated in Fig. 4, where elements similar to those of the first embodiment steam system 50 are identified with the same reference numerals. The steam system 50 of the present embodiment is substantially identical to the steam system 50 of the previous embodiment, except that the temperature sensor 80 is positioned in the third fluid conduit 86 downstream of the steam generator 70, and the flow controller is in the form of a drain valve 88. The temperature sensor 80 located downstream of the steam generator 70 senses the parameter representative of the temperature of the water in the steam generator 70. Prior to actuation of the flow controller 88 to drain the water, the water in the third fluid conduit 86 upstream from the closed flow controller 88 is at a temperature the same as or less than the temperature of the water in the steam generator 70. If a temperature differential exists between the water in the steam generator 70 and the water in the third fluid conduit 86, the controller 36 can account for this known differential when determining if the water in the steam generator 70 is suitable for draining.

The flow controller 88 can be in the form of the drain valve, as shown in Fig. 4, when the drain vessel 84 is disposed at a location, such as a location vertically below the drain 82, that does not require assistance of a pump for moving the water from the steam generator 70 to the drain vessel 84. The drain valve 88 is operable between a closed condition, wherein water cannot flow through the drain valve 88 to the drain vessel 84, and an opened condition, wherein water can flow through the drain valve 88 to the drain vessel 84. The flow controller 88 in the form of the drain valve is operably coupled to the controller 36 and thereby the temperature sensor 80 in the same manner as described previously for the flow controller in the form of the pump. Thus, the controller 36 prevents opening of the drain valve 88 when the water temperature is not suitable for draining, as described above.

While the oven according to the invention has been described above and shown in the figures with respect to illustrative embodiments, it is within the scope of the invention to modify certain aspects of the steam system. For example, the supply vessel and the drain vessel can be configured as a single vessel, as described in the aforementioned patent application. Further, water can be supplied to the steam system in a manner other than through the supply vessel. For example, the water reservoir can be connected to a main water supply, and the water supply system can include a pressure regulator for controlling the pressure of the water entering the steam system. In the steam system, the internal reservoir can be integrated with the chamber in the steam generator such that the water from the vessel is supplied directly to the steam generator. When the steam system does comprise the water reservoir, the steam system can include a valve positioned between the water reservoir and the steam generator to control the flow of water to the steam generator. Additionally, the steam generator can be any suitable system that is capable of converting water into steam for introduction into the cavity or capable of introducing water into the cavity that is turned into steam in the cavity and is not limited to the system shown schematically in the figures.

While the invention has been specifically described in connection with certain specific embodiments thereof, it is to be understood that this is by way of illustration and not of limitation, and the scope of the appended claims should be construed as broadly as the prior art will permit.

## Claims

1. A household oven comprising:
a housing defining a cooking cavity (26);
a steam generator (50) having an inlet (54, 56) for receiving water, a drain (82), and a steam outlet (78) operably connected to the cooking cavity for introducing steam into the cooking cavity;
a temperature sensor (80) that senses a parameter representative of a temperature of water in the steam generator (50) for determining if the temperature of the water in the steam generator is suitable for draining; and
a flow controller (88) operably coupled to the temperature sensor (80) and fluidly coupled to the drain (82) to control draining of the water from the steam generator based on the determination of whether the water temperature is suitable for draining.

2. The household oven according to claim 1 wherein the water temperature is suitable for draining when the sensed parameter is less than a predetermined threshold.

3. The household oven according to claim 1, wherein the sensed parameter is the water temperature.

4. The household oven according to claim 3, wherein the temperature sensor (80) is located in the steam generator (50), and preferably it contacts the water in the steam generator.

5. The household oven according to claim 1, wherein the flow controller comprises a pump (88) and/or a valve.

6. The household oven according to claim 1 and further comprising a drain vessel (84) having an inlet fluidly coupled to the steam generator drain (82), whereby the drain vessel receives drain water from the steam generator (50) via the flow controller (88).

7. The household oven according to claim 1 and further comprising a water reservoir (58) upstream of the steam generator (74) and fluidly coupled to the steam generator inlet (56) for supplying water to the steam generator.

8. The household oven according to claim 7, wherein the water reservoir (58) is fluidly coupled to the steam generator (74) through a direct fluid connection whereby water in the water reservoir flows by gravity to the steam generator and drains with the water in the steam generator when the water temperature is suitable for draining.

9. The household oven according to claim 1 and further comprising an indicator (35) that communicates at least one of a temperature status of the water in the steam generator and an operational status of the flow controller (88).

10. The household oven according to claim 9, wherein the indicator (35) communicates both the temperature status of the water in the steam generator and the operational status of the flow controller (88).

11. A method for draining water from a steam generator (50) of a household oven comprising a housing defining a cooking cavity (26), the steam generator operably connected to the cooking cavity for introducing steam into the cooking cavity, the method comprising:
sensing a parameter representative of a temperature of water in the steam generator (50, 74);
determining if the water temperature is suitable for draining; and
draining the water from the steam generator when the water temperature is determined suitable for draining.

12. The method according to claim 11, wherein the draining of the water comprises actuating a flow controller (88) downstream of the steam generator (50, 74).
